(19) **Europäisches Patentamt / European Patent Office / Office européen des brevets**

(11) **EP 4 667 099 A1**

(12) **EUROPEAN PATENT APPLICATION**
published in accordance with Art. 153(4) EPC

(43) Date of publication:
**24.12.2025 Bulletin 2025/52**

(21) Application number: **25765457.4**

(22) Date of filing: **24.02.2025**

(51) International Patent Classification (IPC):
*B01J 37/08* (2006.01)        *B01J 23/00* (2006.01)
*B01J 23/83* (2006.01)        *B01J 20/30* (2006.01)
*B01J 37/02* (2006.01)        *C01B 3/40* (2006.01)

(52) Cooperative Patent Classification (CPC):
**B01J 20/30; B01J 23/00; B01J 23/83; B01J 35/70;
B01J 37/02; B01J 37/08; C01B 3/40;** Y02P 20/52

(86) International application number:
**PCT/KR2025/002534**

(87) International publication number:
**WO 2025/216427 (16.10.2025 Gazette 2025/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.04.2024   KR 20240047482**

(71) Applicant: **LG CHEM, LTD.
Seoul 07336 (KR)**

(72) Inventors:
  • **KIM, Sojin
    Daejeon 34122 (KR)**
  • **CHOI, Hyun A
    Daejeon 34122 (KR)**

  • **KIM, Sangjin
    Daejeon 34122 (KR)**
  • **KIM, Suji
    Daejeon 34122 (KR)**
  • **KIM, Yongseon
    Daejeon 34122 (KR)**
  • **CHO, Jun Yeon
    Daejeon 34122 (KR)**
  • **CHOI, Jae Soon
    Daejeon 34122 (KR)**
  • **CHOI, Jun Seon
    Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **METHANE-REFORMING CATALYST AND METHOD FOR PRODUCING SAME**

(57)    The present disclosure is directed to providing a method for preparing a catalyst for methane reforming, comprising the steps of: preparing a first solution containing a precursor of a perovskite-based compound represented by Chemical Formula 1; adding a pore-forming agent which is a hydrophilic oligomer or polymer to the first solution to prepare a second solution; and coating a carrier with the second solution and carrying out heat treatment to obtain a catalyst, wherein the second solution has a viscosity of 10 cp to 1,500 cp at 25°C.

[FIG. 1]

5.0kV 10.4mm x10.0k                     5.00um

**Description**

[Technical Field]

The present application claims the benefit of Korean Patent Application No. 10-2024-0047482 filed on April 8, 2024, in the Korean Intellectual Property Office, the entire disclosure of which is incorporated herein by reference.
The present disclosure relates to a catalyst for methane reforming and a method for preparing the same.

[Background Art]

Many studies have been conducted about technologies of carbon dioxide conversion as a part of actions for reducing greenhouse gas caused by global warming. Carbon dioxide reforming, one of the technologies of carbon dioxide conversion, is a technology of allowing methane and carbon dioxide to react with each other to obtain syngas containing hydrogen and carbon monoxide.
Such syngas is a highly valuable substance in terms of development as a raw material of various down-streams. As a method for industrially producing such syngas ($H_2$/CO), reforming of natural gas may be broadly classified into steam reforming, carbon dioxide ($CO_2$) reforming, catalytic partial oxidation, autothermal reforming and tri-reforming, as shown in the following Reaction Formula 1 to Reaction Formula 5:

[Reaction Formula 1]     $CH_4 + H_2O \rightarrow 3H_2 + CO \; \triangle H = 226 \; kJ/mol$

[Reaction Formula 2]     $CH_4 + CO_2 \rightarrow 2H_2 + 2CO \; \triangle H = 261 \; kJ/mol$

[Reaction Formula 3]     $CH_4 + 0.5O_2 \rightarrow 2H_2 + CO \; \triangle H = -44 \; kJ/mol$

[Reaction Formula 4]

Autothermal reforming: Reaction Formula 1 + Reaction Formula 3

[Reaction Formula 5]

Tri-reforming: Reaction Formula 1 + Reaction Formula 2 + Reaction Formula 3

Meanwhile, various types of catalysts may be used for reforming activity in reforming processes. Among such catalysts, when a noble metal catalyst is used in a reforming process, there is an advantage in that high efficiency of conversion of hydrogen from natural gas is obtained, but there is a problem in that cost-efficiency is degraded due to the high cost of noble metal catalyst.
Therefore, a nickel catalyst has been used frequently in a reforming process since it provides high hydrogen conversion efficiency and is relatively cheap. However, in this case, there is a problem in that the nickel catalyst is inactivated due to carbon produced inevitably on the surface of the nickel catalyst.
Therefore, there is a need for developing a catalyst having resistance against carbon deposition and applicable effectively to a methane reforming process.

**[Disclosure]**

[Technical Problem]

The present disclosure is directed to providing a catalyst for methane reforming and a method for preparing the same.

[Technical Solution]

An exemplary embodiment of the present disclosure provides a method for preparing a catalyst for methane reforming, comprising the steps of:

preparing a first solution containing a precursor of a perovskite-based compound represented by the following Chemical Formula 1;

adding a pore-forming agent which is a hydrophilic oligomer or polymer to the first solution to prepare a second solution; and

coating a carrier with the second solution and carrying out heat treatment to obtain a catalyst, wherein the second solution has a viscosity of 10 cp to 1,500 cp at 25°C:

[Chemical Formula 1] $Sr_{1-x}A_xTi_\alpha B_yO_{3-\delta}$

wherein A is selected from the group consisting of Y, Sc, La and lanthanide-series elements,

B is Ni, Co, Fe, Mn, Cr, Mo, Ru or Rh,

x is a real number equal to or larger than 0 and less than 1,

y is a real number equal to or larger than 0 and less than 0.2,

$\delta$ is a real number equal to or larger than 0 and less than 1,

$\alpha$ is a real number larger than 0.8 and equal to or less than 1, and

x and y satisfy $(x + y) > 0$.

Another exemplary embodiment of the present disclosure provides a catalyst for methane reforming comprising: a carrier; and a coating layer provided on the carrier and comprising a perovskite-based compound represented by the above Chemical Formula 1, wherein the outermost surface layer of the catalyst for methane reforming has an average porosity of 15% or more as determined by the following Method 1:

[Method 1]

A scanning electron microscopic (SEM) image is obtained at any position of the outermost surface layer of the catalyst for methane reforming at an accelerated voltage of 5 kv and a magnification of 10,000X with a pixel of 1,280 x 960, and then porosity is calculated according to the following Equation 2. Herein, 20 SEM images are obtained at any positions not overlapped with one another, porosity is calculated from each SEM image, and the average value of the porosity values is evaluated as average porosity (%):

Porosity (%) = (Total area of pore portions in SEM image) / (Total area of outermost surface layer in SEM image) X 100 [Equation 2]

[Advantageous Effects]

A catalyst for methane reforming according to an exemplary embodiment of the present disclosure can be formed in the shape of a perovskite coating layer by coating a perovskite-based catalyst component represented by the above Chemical Formula 1 directly on a carrier with no separate binder. In this manner, the catalyst for methane reforming is characterized in that it has an increased active surface area.

In addition, a catalyst for methane reforming according to an embodiment of the present disclosure may have increased porosity by adding a pore-forming agent which is a hydrophilic oligomer or polymer to the first solution containing a precursor of a perovskite-based compound represented by the above Chemical Formula 1. In this manner, the catalyst for methane reforming may have an increased active surface area, and may show high activity even at a high space velocity when being used in a methane reforming reaction.

Further, in a method for preparing a catalyst for methane reforming according to an exemplary embodiment of the present disclosure, the second solution to which a pore-forming agent which is a hydrophilic oligomer or polymer is added satisfies a viscosity of 10-1,500 cp at 25°C, and thus allows an increase in one-time coating amount when coating a carrier with the second solution.

[Brief Description of Drawings]

FIG. 1 shows a scanning electron microscopic (SEM) image of the catalyst for methane reforming according to Example 1 of the present disclosure.

FIG. 2 shows the porosity analysis result of the catalyst for methane reforming according to Example 4 of the present disclosure.

FIG. 3 shows the porosity analysis result of the catalyst for methane reforming according to Example 6 of the present disclosure.

FIG. 4 shows an SEM image of the catalyst for methane reforming according to Comparative Example 1.

FIG. 5 shows the porosity analysis result of the catalyst for methane reforming according to Comparative Example 1.

FIG. 6 shows an SEM image of the catalyst for methane reforming according to Comparative Example 3.

[Best Mode]

Hereinafter, the present disclosure will be explained in more detail.

Throughout the present specification, when a certain member is described to be located "on" another member, this comprises not only the case where the member is in contact with said another member but also the case where another member exists between the two members.

Throughout the present specification, when a part is described to "comprise" a component, this does not exclude the presence of another component but rather implies that further components may be comprised, unless the context specifically states otherwise.

Currently, in the case of catalysts widely used in the field of reformers, powder-type catalysts and pellet-type supported catalysts generally dominate. In the case of the powder-type catalyst, the catalyst has high dispersibility and may show excellent performance, but it is difficult to use the catalyst directly in the industry. For example, when the reformer is driven by using the powder-type catalyst, the catalyst comes out together with a material generated after reaction, and in this case, the powder-type catalyst may be accumulated gradually in a pipe at an outlet, and finally, the pipe may be totally blocked. Therefore, there is a disadvantage in that the powder-type catalyst cannot be used in commercialized reformers used in the industry.

Therefore, a catalyst molded in a pellet-like shape is currently used in commercialized reformers. Due to the limitation in a material transfer rate, such a catalyst shows performance inferior to that of the powder-type catalyst when considering only the performance of the catalyst, but is used in a suitably molded state considering fluid flow in a reactor, such as a differential pressure, and operation easiness. However, in the case of a catalytic reaction, only the catalyst component on the surface that can be in contact with reactants participates in the reaction, and thus in the case of the catalyst molded in a pellet-like shape, there is a disadvantage in that it is difficult for the catalyst present inside thereof to participate in the reaction.

Under these circumstances, the present disclosure is directed to providing a molded catalyst prepared by coating a catalyst precursor, instead of such a catalyst molded in a pellet-like shape, on a carrier to minimize use of the catalyst while realizing high performance.

When a catalyst precursor is coated on a carrier, an adequate catalyst coating amount is required to optimize the catalyst performance, and for this purpose, coating is carried out repeatedly many times. In the case of repeated coating, it causes an increase in processing cost, and thus it is important to reduce the number of repeated coating work by increasing one-time coating amount.

The inventors of the present disclosure have found that when a pore-forming agent is added to a solution containing a precursor of a perovskite-based compound represented by the above Chemical Formula 1 and the resultant solution is coated on a carrier, it is possible to obtain a catalyst having a specific structure with a coating layer having increased porosity. The pore-forming agent not only functions to increase a surface area but also functions to increase viscosity, and thus can improve the catalyst performance and can provide an effect of reducing processing cost by virtue of an increase in one-time coating amount.

In an exemplary embodiment of the present disclosure, the present disclosure provides a method for preparing a catalyst for methane reforming, comprising the steps of:

preparing a first solution containing a precursor of a perovskite-based compound represented by the following Chemical Formula 1;

adding a pore-forming agent which is a hydrophilic oligomer or polymer to the first solution to prepare a second solution; and

coating a carrier with the second solution and carrying out heat treatment to obtain a catalyst,

wherein the second solution has a viscosity of 10 cp to 1,500 cp at 25°C:

$$[\text{Chemical Formula 1}] \qquad Sr_{1-x}A_xTi_\alpha B_yO_{3-\delta}$$

wherein A is selected from the group consisting of Y, Sc, La and lanthanide-series elements,

B is Ni, Co, Fe, Mn, Cr, Mo, Ru or Rh,

x is a real number equal to or larger than 0 and less than 1,

y is a real number equal to or larger than 0 and less than 0.2,

$\delta$ is a real number equal to or larger than 0 and less than 1,

α is a real number larger than 0.8 and equal to or less than 1, and

x and y satisfy (x + y) > 0.

In an exemplary embodiment of the present disclosure, the carrier functions to support a catalyst component of a perovskite-based compound represented by the above Chemical Formula 1 and is a porous member having a plurality of pores on the surface thereof. The carrier may comprise at least one selected from NiFeCrAl, NiCrAl, stainless steel, Inconel, SiC and α-$Al_2O_3$, but is not limited thereto. In addition, the carrier may be metal foam comprising NiCrAlFe or NiCrAl preferably, because such metal foam has high heat conductivity.

The metal foam comprising NiCrAlFe or NiCrAl is a carrier having various shapes and may have low heat capacity and high heat transferability to be molded into and used in a desired shape. There is no particular limitation in the shape, size, etc. of the metal foam. The metal foam may have a porosity of 10% to 99%, preferably 50% to 96%. In addition, the metal foam may have an average cell size of 150 μm to 3,000 μm, 400 μm to 2,000 μm or 600 μm to 1,700 μm. The metal foam may be prepared suitably by those skilled in the art by using a method known in the art considering the above-described material, cell size, porosity, etc. of the metal foam. According to an exemplary embodiment of the present disclosure, metal foam using various materials and having different cell sizes, or the like, may be used as described in the following examples.

The method for preparing a catalyst for methane reforming according to an exemplary embodiment of the present disclosure comprises a step of preparing a first solution containing a precursor of a perovskite-based compound represented by the above Chemical Formula 1.

In an exemplary embodiment of the present disclosure, the solution containing a precursor of a perovskite-based compound represented by the above Chemical Formula 1 may be applied in the form of sol or gel.

In an exemplary embodiment of the present disclosure, the precursor of a perovskite-based compound is a precursor of a metal forming the perovskite-based compound, and the molar ratio of a metal in the perovskite-based compound may be controlled by adjusting the content of the precursor. In addition, the metal precursor is not particularly limited, and ammonium salts, nitrates, carbonates or chlorides of the metal element, or a mixture thereof may be used.

In an exemplary embodiment of the present disclosure, Chemical Formula 1 may be represented by the following Chemical Formula 2 or 3, but is not limited thereto:

[Chemical Formula 2]     $SrTi_\alpha B_y O_{3-\delta}$

[Chemical Formula 3]     $Sr_{1-x}Y_x Ti_\alpha B_y O_{3-\delta}$

wherein B is Ni, Ru or Rh,

x is a real number larger than 0 and less than 1,

y is a real number larger than 0 and less than 0.2,

δ is a real number larger than 0 and less than 1, and

α is a real number larger than 0.8 and less than 1.

The method for preparing a catalyst for methane reforming according to an exemplary embodiment of the present disclosure comprises a step of adding a pore-forming agent which is a hydrophilic oligomer or polymer to the first solution to prepare a second solution.

Any pore-forming agent may be used with no particular limitation, as long as it is a hydrophilic oligomer or polymer dissolved well in water and ethanol which are solvents of the first solution. However, the pore-forming agent can form pores at high temperature with no residue. In addition, since a catalytic reaction is carried out at a temperature of 800°C or higher, the pore-forming agent should be removed to 100% at a temperature of 800°C or lower. More particularly, the pore-forming agent may comprise one or more selected from polyethylene glycol, polyethylene oxide, polyvinyl alcohol, polyvinyl pyrrolidone and polyacrylic acid, but is not limited thereto.

In an exemplary embodiment of the present disclosure, the content of the pore-forming agent may be determined by the viscosity of the second solution after the pore-forming agent is added. When the pore-forming agent is a surfactant, the content may be determined by critical micelle concentration.

In an exemplary embodiment of the present disclosure, the second solution may have a viscosity of 10 cp to 1,500 cp, 10 cp to 1,000 cp, or 10 cp to 500 cp at 25°C. When the second solution has a viscosity of less than 10 cp, the effect of increasing the viscosity of a catalyst is insufficient. In addition, excessively high viscosity may cause coating agglomeration on the surface undesirably. In the case of a pore-forming agent which is a surfactant, there is a disadvantage in that the catalyst forms a spherical structure upon coating to cause a decrease in surface area, when exceeding the critical micelle concentration (CMC). All conditions should be considered. Under these circumstances, in an exemplary embodiment of the present disclosure, the pore-forming agent may be added in an amount of 1 wt% to 25 wt% or 3 wt% to 10 wt%, based on the total weight of the first solution. The content of the pore-forming agent may be controlled depending on the type, weight average molecular weight, etc. of the pore-forming agent. When the above-defined content range of the pore-forming agent is satisfied, it is possible to form an optimized catalyst layer pore structure.

The method for preparing a catalyst for methane reforming according to an embodiment of the present disclosure comprises a step of coating a carrier with the second solution and carrying out heat treatment to obtain a catalyst.

The carrier may be coated with the second solution by using a method known to those skilled in the art, such as dip coating, wash coating, or the like, but is not limited thereto.

In an exemplary embodiment of the present disclosure, the heat treatment process may comprise a drying step and firing step. The drying step may be carried out at a temperature of 50°C to 200°C for 1-48 hours, or at a temperature of 60°C to 150°C for 5 hours to 36 hours, but is not limited thereto. In addition, the firing step may be carried out at a temperature of 350°C to 1,300°C for 1 hour to 10 hours under the atmosphere of air, or at a temperature of 500°C to 1,200°C for 1.5 hours to 8 hours under the atmosphere of air, but is not limited thereto. When the firing step is carried out at a temperature of lower than 350°C, a perovskite phase cannot be formed properly. When the firing step is carried out at a temperature of higher than 1,300°C, the carrier may undergo degradation of durability undesirably.

In an exemplary embodiment of the present disclosure, the method may further comprise a step of weighing the perovskite-based coating layer coated on the carrier, after carrying out the heat treatment process. In addition, the second solution may be coated until a desired amount of catalyst is coated on the carrier by weighing the perovskite-based coating layer coated on the carrier, and then the step of carrying out the heat treatment process may be performed twice to 10 times repeatedly.

Another exemplary embodiment of the present disclosure provides a catalyst for methane reforming obtained by the above-described method for preparing a catalyst for methane reforming.

The catalyst for methane reforming according to another exemplary embodiment of the present disclosure comprises: a carrier; and a coating layer provided on the carrier and comprising a perovskite-based compound represented by the above Chemical Formula 1, wherein the outermost surface layer of the catalyst for methane reforming has an average porosity of 15% or more as determined by the following Method 1:

[Method 1]

A scanning electron microscopic (SEM) image is obtained at any position of the outermost surface layer of the catalyst for methane reforming at an accelerated voltage of 5 kv and a magnification of 10,000X with a pixel of 1,280 x 960, and then porosity is calculated according to the following Equation 2. Herein, 20 SEM images are obtained at any positions not overlapped with one another, porosity is calculated from each SEM image, and the average value of the porosity values is evaluated as average porosity (%):

$$\text{Porosity (\%)} = \text{(Total area of pore portions in SEM image)} / \text{(Total area of outermost surface layer in SEM image)} \times 100 \qquad \text{[Equation 2]}$$

In the catalyst for methane reforming according to an exemplary embodiment of the present disclosure, detailed description of the carrier and the coating layer comprising a perovskite-based compound represented by the above Chemical Formula 1 is the same as described above.

In an exemplary embodiment of the present disclosure, the content of the coating layer comprising a perovskite-based compound represented by the above Chemical Formula 1 may be 3 wt% to 40 wt%, 6 wt% to 35 wt%, or 7 wt% to 30 wt%, based on the total weight of the catalyst for methane reforming. When the content of the coating layer comprising a perovskite-based compound represented by the Chemical Formula 1 is less than 3 wt% based on the total weight of the catalyst for methane reforming, a relatively smaller number of active spots is present on the catalyst surface, resulting in degradation of reactivity undesirably. In addition, when the content of the coating layer comprising a perovskite-based compound represented by the above Chemical Formula 1 is larger than 40 wt% based on the total weight of the catalyst for methane reforming, a relatively larger amount of catalyst components is present as compared to the carrier, thereby making it difficult to retain the pore structure and to accomplish binding of catalyst components with the carrier, resulting in degradation of benefits of methane reforming reaction.

In an exemplary embodiment of the present disclosure, the outermost surface layer of the catalyst for methane reforming may have an average porosity of 15% or more, 15% to 40%, or 15% to 30%. When the average porosity of the outermost surface layer of the catalyst for methane reforming is less than 15%, it is not possible to increase the active surface area of the catalyst for methane reforming, and thus high activity cannot be realized at a high space velocity undesirably when the catalyst for methane reforming is applied to methane reforming.

In an exemplary embodiment of the present disclosure, the total area of the outermost surface layer and the total area of pore portions in the SEM image of the above Equation 2 may be determined by using image J software.

In an exemplary embodiment of the present disclosure, the catalyst for methane reforming may be applied to steam reforming, carbon dioxide ($CO_2$) reforming, catalytic partial oxidation, autothermal reforming, tri-reforming or mixed reforming, and there is no particular limitation in the methane reforming process.

Still another exemplary embodiment of the present disclosure provides a methane reforming method, comprising the steps of: filling a reactor with the catalyst according to the present disclosure; activating the catalyst; supplying a feed gas to the reactor; and applying heat and pressure to the feed gas.

In an exemplary embodiment of the present disclosure, the methane reforming method may be a dry reforming reaction.

In an exemplary embodiment of the present disclosure, the step of activating the catalyst may be a step of carrying out heat treatment under the condition of $H_2/N_2$ at a temperature of 700°C to 900°C, preferably 750°C to 850°C. In other words, the step may be a step of activating the catalyst through a reduction process. The condition of $H_2/N_2$ refers to a ratio of volume of hydrogen ($H_2$) based on volume of nitrogen ($N_2$). More particularly, the step of activating the catalyst may be carried out under the condition of 5-15%, preferably 7-12%, and more preferably 10% of $H_2/N_2$.

In an exemplary embodiment of the present disclosure, the feed gas may comprise methane ($CH_4$) and carbon dioxide ($CO_2$). In addition, the feed gas may further comprise an inert gas. In an exemplary embodiment of the present disclosure, the feed gas may comprise methane ($CH_4$) and carbon dioxide ($CO_2$) and may further comprise hydrogen ($H_2$) and/or nitrogen ($N_2$). When the feed gas comprises methane ($CH_4$) and carbon dioxide ($CO_2$) and further comprises hydrogen ($H_2$) and/or nitrogen ($N_2$), the feed gas may have a volume ratio of $CH_4$ : $CO_2$ : ($H_2$ and/or $N_2$) of 1 : (1-1.4) : (0.1-1). In other words, the volume of carbon dioxide in the feed gas may be 1-1.4 times of the volume of methane, and the volume of hydrogen and/or nitrogen in the feed gas may be 0.1-1 times of the volume of methane.

In an exemplary embodiment of the present disclosure, methane ($CH_4$) of the feed gas may be $CH_4$ derived from natural gas or bio-methane as well as general methane ($CH_4$) gas.

In an exemplary embodiment of the present disclosure, carbon dioxide ($CO_2$) of the feed gas may be $CO_2$ emitted from plants, such as a byproduct gas of steelworks, as well as general carbon dioxide ($CO_2$).

In an exemplary embodiment of the present disclosure, in the step of supplying a feed gas to the reactor, the feed gas may have a weight hourly space velocity (WHSV) of 1,000 $hr^{-1}$ to 100,000 $hr^{-1}$, preferably 1,200 $hr^{-1}$ to 50,000 $hr^{-1}$.

In an exemplary embodiment of the present disclosure, the step of applying heat and pressure to the feed gas may be carried out at a temperature of 700-900°C, preferably 750°C to 850°C under a pressure of 0.5 bar to 1.5 bar, preferably 0.8 bar to 1.2 bar.

In an exemplary embodiment of the present disclosure, the step of applying heat and pressure to the feed gas may be carried out for 20 hours or more.

The methane reforming method according to the present disclosure may be carried out through a method used conventionally in methane reforming or dry reforming, except that the catalyst according to the present disclosure is used.

The catalyst for methane reforming according to an exemplary embodiment of the present disclosure may be formed in the shape of a perovskite coating layer by coating a perovskite-based catalyst component represented by the above Chemical Formula 1 directly on a carrier with no separate binder. In this manner, the catalyst for methane reforming is characterized in that it has an increased active surface area.

In addition, the catalyst for methane reforming according to an exemplary embodiment of the present disclosure may have increased porosity by adding a pore-forming agent which is a hydrophilic oligomer or polymer to a first solution containing a precursor of a perovskite-based compound represented by the above Chemical Formula 1. In this manner, the catalyst for methane reforming may have an increased active surface area, and may show high activity even at a high space velocity when being used in a methane reforming reaction.

Further, the method for preparing a catalyst for methane reforming according to an exemplary embodiment of the present disclosure satisfies that the second solution to which the pore-forming agent which is a hydrophilic oligomer or polymer is added has a viscosity of 10-1,500 cp at 25°C, and thus can increase one-time coating amount when a carrier is coated with the second solution.

[Mode for Invention]

Hereinafter, the present disclosure is described in detail through examples. However, the examples according to the present disclosure may be changed into several different forms, and the scope of the present disclosure is not to be interpreted as being limited to the examples described below. The examples of the present specification are provided to describe the present disclosure more fully to those having ordinary knowledge in the art.

<Examples>

<Example 1> $SrTi_{0.95}Ni_{0.05}O_{3-\delta}$ / NiCrAl

A first solution containing a precursor of a perovskite catalyst component was prepared through the citric acid process. More particularly, strontium nitrate ($Sr(NO_3)_3 \cdot H_2O$) and nickel nitrate ($Ni(NO_3)_2$) were dissolved together with citric acid and ethylene glycol in distilled water to prepare solution 1-1. Then, titanium isopropoxide ($Ti(OCH(CH_3)_2)_4$) was dissolved in ethanol to prepare solution 1-2, and solution 1-1 and solution 1-2 were mixed at 70°C to prepare a first solution. After that, the first solution was agitated for 3 hours, cooled to room temperature and stored. Herein, the solution had a concentration of 0.1 M, and nickel was contained at 5 mol% based on titanium.

Then, 8 wt% of polyethylene glycol (PEG, Sigma-Aldrich, weight average molecular weight 4,000 g/mol) as a pore-forming agent was added to the first solution, and the resultant mixture was agitated with a magnetic stirrer for 1 hour to prepare a second solution containing PEG added thereto.

After that, dip coating was carried out so that the second solution prepared as described above might be supported in metal foam (NiCrAl, average cell size: 800 μm, available from Alantum) as a carrier, the carrier subjected to dip coating was dried at 70°C for 24 hours, and then heat treatment was carried out at 900°C under the atmosphere of air for 3 hours. The dip coating, drying and heat treatment were repeated three times to obtain a catalyst comprising the metal foam coated with $SrTi_{0.95}Ni_{0.05}O_{3-\delta}$ ($0 < \delta < 1$) finally.

<Example 2> $Sr_{0.9}Y_{0.1}Ti_{0.9}Ru_{0.1}O_{3-\delta}$ / $Al_2O_3$ ball

A catalyst comprising a carrier coated with $Sr_{0.9}Y_{0.1}Ti_{0.9}Ru_{0.1}O_{3-\delta}$ ($0 < \delta < 1$) was prepared in the same manner as Example 1, except that yttrium nitrate ($Y(NO_3)_2$) was further added at 10 mol% based on strontium, ruthenium chloride ($RuCl_3$) was added instead of nickel nitrate ($Ni(NO_3)_2$) at 10 mol% based on titanium, and the type and added amount of a pore-forming agent and the type of a support as shown in the following Table 1 were applied.

<Example 3> $SrTi_{0.9}Ru_{0.1}O_{3-\delta}$ / NiFeCrAl

A catalyst comprising a carrier coated with $SrTi_{0.9}Ru_{0.1}O_{3-\delta}$ ($0 < \delta < 1$) was prepared in the same manner as Example 1, except that ruthenium chloride ($RuCl_3$) was added instead of nickel nitrate ($Ni(NO_3)_2$) at 10 mol% based on titanium, and the type and added amount of a pore-forming agent and the type of a support as shown in the following Table 1 were applied.

<Example 4> $Sr_{0.9}Y_{0.1}Ti_{0.85}Ni_{0.15}O_{3-\delta}$ / NiCrAl

A catalyst comprising a carrier coated with $Sr_{0.9}Y_{0.1}Ti_{0.85}Ni_{0.15}O_{3-\delta}$ ($0 < \delta < 1$) was prepared in the same manner as Example 1, except that yttrium nitrate ($Y(NO_3)_2$) was further added at 10 mol% based on strontium, nickel content was increased to 15 mol% based on titanium, and the type and added amount of a pore-forming agent and the type of a support as shown in the following Table 1 were applied.

<Example 5> $SrTi_{0.97}Ni_{0.03}O_{3-\delta}$ / NiCrAl

A catalyst comprising a carrier coated with $SrTi_{0.97}Ni_{0.03}O_{3-\delta}$ ($0 < \delta < 1$) was prepared in the same manner as Example 1, except that nickel content was reduced to 3 mol% based on titanium, and the type and added amount of a pore-forming agent and the type of a support as shown in the following Table 1 were applied.

<Example 6> $Sr_{0.9}Y_{0.1}Ti_{0.87}Ni_{0.13}O_{3-\delta}$ / NiFeCrAl

A catalyst comprising a carrier coated with $Sr_{0.9}Y_{0.1}Ti_{0.87}Ni_{0.13}O_{3-\delta}$ ($0 < \delta < 1$) was prepared in the same manner as Example 1, except that yttrium nitrate ($Y(NO_3)_2$) was further added at 10 mol% based on strontium, nickel content was increased to 13 mol% based on titanium, and the type and added amount of a pore-forming agent and the type of a support as shown in the following Table 1 were applied.

<Example 7> $SrTi_{0.93}Ni_{0.07}O_{3-\delta}$ / NiCrAl

A catalyst comprising a carrier coated with $SrTi_{0.93}Ni_{0.07}O_{3-\delta}$ ($0 < \delta < 1$) was prepared in the same manner as Example 1, except that nickel content was increased to 7 mol% based on titanium, and the type and added amount of a pore-forming agent and the type of a support as shown in the following Table 1 were applied.

<Comparative Example 1> $SrTi_{0.93}Ni_{0.03}O_{3-\delta}$ / NiCrAl

A catalyst comprising a carrier coated with $SrTi_{0.95}Ni_{0.05}O_{3-\delta}$ ($0 < \delta < 1$) was prepared in the same manner as Example 1, except that the first solution was coated on the carrier while the second solution-preparing step of adding a pore-forming agent was not carried out.

<Comparative Example 2> $Sr_{0.9}Y_{0.1}Ti_{0.9}Ru_{0.1}O_{3-\delta}$ / $Al_2O_3$ ball

A catalyst comprising a carrier coated with $Sr_{0.9}Y_{0.1}Ti_{0.9}Ru_{0.1}O_{3-\delta}$ ($0 < \delta < 1$) was prepared in the same manner as Example 2, except that the first solution was coated on the carrier while the second solution-preparing step of adding a pore-forming agent was not carried out.

<Comparative Example 3> $Sr_{0.9}Y_{0.1}Ti_{0.85}Ni_{0.15}O_{3.5}$ / NiCrAl

A catalyst comprising a carrier coated with $Sr_{0.9}Y_{0.1}Ti_{0.9}Ru_{0.1}O_{3-\delta}$ ($0 < \delta < 1$) was prepared in the same manner as Example 4, except that the type and added amount of a pore-forming agent and the type of a support as shown in the following Table 1 were applied.

<Comparative Example 4> Zr-Ce-La(75%-20%-5%) / NiCrAl

First, 87.5 g of $ZrOCl_2 \cdot 8H_2O$, 73.2 g of 28.0% $Ce(NO_3)_3 \cdot 6H_2O$ solution and 21.5 g of 18.0% $La(NO_3)_3$ solution were mixed with 200 g of distilled water to prepare a solution containing Zr, Ce and La salts. The solution was added dropwise to a 1 L beaker containing 700 g of 25% $NH_4OH$ solution and agitated at 200 rpm. The formed precipitate was filtered by using a Buchner filter and washed with distilled water to remove excessive chloride, nitrate and ammonium ions. Then, the precipitate was dried at 150°C for 24 hours, and heat treatment was carried out at 900°C under the atmosphere of air for 3 hours to obtain oxide powder. The oxide powder was subjected to ball milling at 120 rpm for 8 hours and mixed with water as a solvent to a ratio of 5 wt%, thereby preparing a coating solution.
Then, dip coating was carried out so that the coating solution prepared as described above might be supported in metal foam (NiCrAl, average cell size: 800 μm, available from Alantum) as a carrier, the carrier subjected to dip coating was dried at 70°C for 24 hours, and then heat treatment was carried out at 900°C under the atmosphere of air for 3 hours.

<Comparative Example 5> Zr-Ce-La(75%-20%-5%) / NiCrAl

Comparative Example 4 was repeated, except that aqueous solution of 8 wt% polyethylene glycol (PEG, sigma-Aldrich, weight average molecular weight 4,000 g/mol) was used instead of water.

<Comparative Example 6> $SrTi_{0.97}Ni_{0.03}O_{3-\delta}$ / NiCrAl

A catalyst comprising a carrier coated with $SrTi_{0.97}Ni_{0.03}O_{3-\delta}$ ($0 < \delta < 1$) was prepared in the same manner as Example 2, except that the first solution was coated on the carrier while the second solution-preparing step of adding a pore-forming agent was not carried out.

[Table 1]

| | Pore-forming agent | | | Viscosity of coating solution (cp) | Carrier |
|---|---|---|---|---|---|
| | Type | Mw (g/mol) | Added amount (wt%) | | |
| Example 1 | PEG | 4,000 | 8 | 13.70 | Metal foam (NiCrAl, average cell size: 800 μm) |
| Example 2 | PEG | 8,000 | 10 | 44.70 | $Al_2O_3$ ball |
| Example 3 | PEG | 20,000 | 3 | 16.90 | Metal foam (NiFeCrAl, average cell size: 3,000 μm) |
| Example 4 | PEG | 20,000 | 10 | 76.50 | Metal foam (NiCrAl, average cell size: 1,200 μm) |
| Example 5 | PEG | 8,000 | 25 | 372.50 | Metal foam (NiCrAl, average cell size: 1,200 μm) |
| Example 6 | PVA | 500 | 5 | 55.70 | Metal foam (NiFeCrAl, average cell size: 800 μm) |

(continued)

| | Pore-forming agent | | | Viscosity of coating solution (cp) | Carrier |
| | Type | Mw (g/mol) | Added amount (wt%) | | |
|---|---|---|---|---|---|
| Example 7 | PVA | 500 | 3 | 20.10 | Metal foam (NiCrAl, average cell size: 1,500 $\mu$m) |
| Comparative Example 1 | - | - | - | 10.02 | Metal foam (NiCrAl, average cell size: 800 $\mu$m) |
| Comparative Example 2 | - | - | - | 9.88 | $Al_2O_3$ ball |
| Comparative Example 3 | PEG | 20,000 | 18 | 1532.00 | Metal foam (NiCrAl, average cell size: 1,200 $\mu$m) |
| Comparative Example 4 | - | - | - | 31.2 | Metal foam (NiCrAl, average cell size: 800 $\mu$m) |
| Comparative Example 5 | PEG | 4,000 | 8 | 49.8 | Metal foam (NiCrAl, average cell size: 800 $\mu$m) |
| Comparative Example 6 | - | - | - | 10.10 | Metal foam (NiCrAl, average cell size: 1,200 $\mu$m) |
| PEG: Polyethylene glycol PVA: Polyvinyl alcohol | | | | | |

The viscosity of the coating solution was determined by using a BROOKFIELD (model: LVDV II) viscometer, wherein a spindle selected to provide a range of torque of 10-30% at 25°C was used and viscosity obtained after measuring for about 5 minutes was recorded.

**<Test example 1> Evaluation of catalyst for methane reforming**

The catalyst according to each of Examples and Comparative Examples was evaluated in terms of catalyst coating amount, BET surface area and average porosity. The results are shown in the following Table 2.

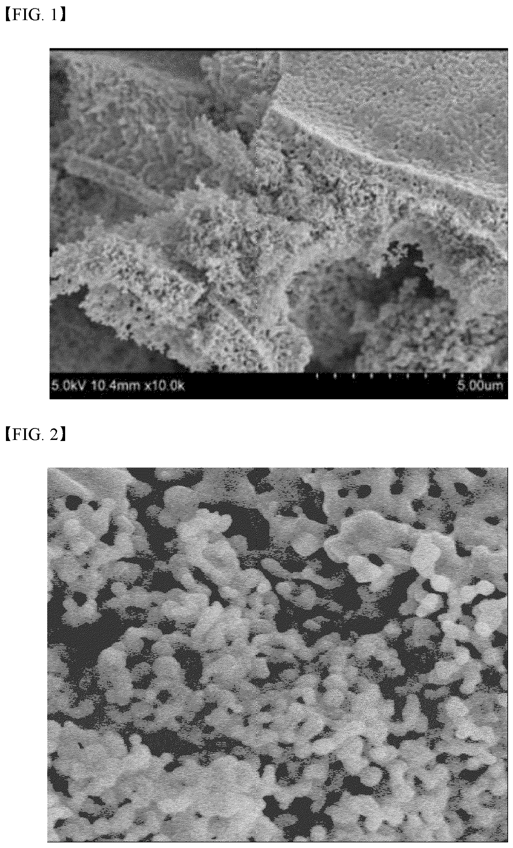

FIG. 1 shows a scanning electron microscopic (SEM) image of the catalyst for methane reforming according to Example 1 of the present disclosure.
FIG. 2 shows the porosity analysis result of the catalyst for methane reforming according to Example 4 of the present disclosure.

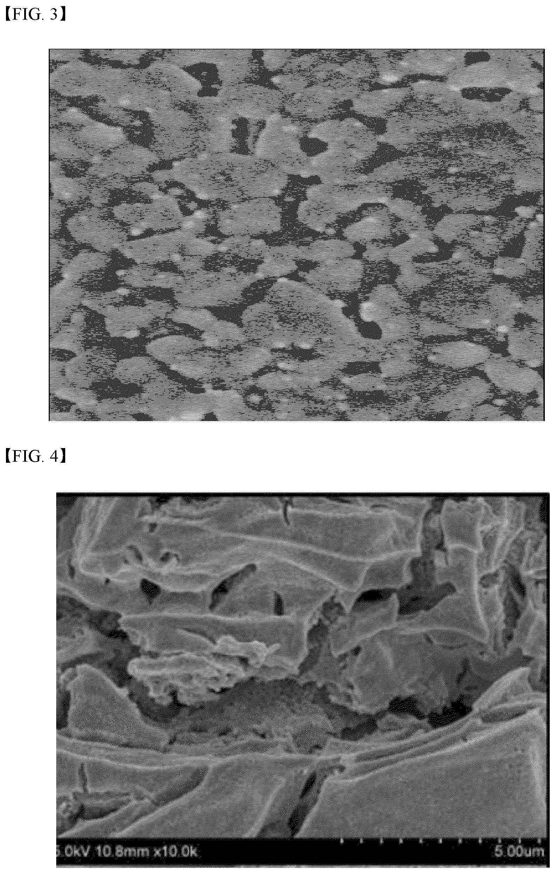

FIG. 3 shows the porosity analysis result of the catalyst for methane reforming according to Example 6 of the present disclosure.
FIG. 4 shows an SEM image of the catalyst for methane reforming according to Comparative Example 1.

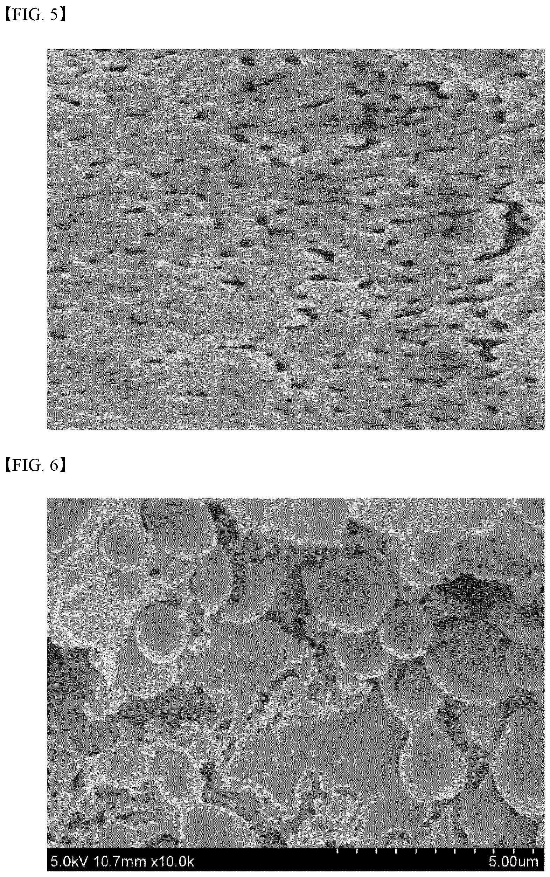

FIG. 5 shows the porosity analysis result of the catalyst for methane reforming according to Comparative Example 1.
FIG. 6 shows an SEM image of the catalyst for methane reforming according to Comparative Example 3.

The evaluation results as shown in Table 2 are determined by the following methods.

**<Catalyst coating amount>**

The catalyst coating amount was calculated according to the following Equation 1:

Catalyst coating amount (wt%) = (Total weight of catalyst - weight of carrier) / (Total weight of catalyst) X 100                                              [Equation 1]

**<BET surface area>**

The BET surface area was determined by using ASAP 2020 (Micromeritics) from an $N_2$ adsorption/desorption

isothermal curve at -196°C.

**<Average porosity>**

The average porosity of the outermost surface layer of each catalyst for methane reforming was evaluated according to the following Method 1:

[Method 1]

A scanning electron microscopic (SEM) image is obtained at any position of the outermost surface layer of the catalyst for methane reforming at an accelerated voltage of 5 kv and a magnification of 10,000X with a pixel of 1,280 x 960, and then porosity is calculated according to the following Equation 2. Herein, 20 SEM images are obtained at any positions not overlapped with one another, porosity is calculated from each SEM image, and the average value of the porosity values is evaluated as average porosity (%):

Porosity (%) = (Total area of pore portions in SEM image) / (Total area of outermost surface layer in SEM image) X 100                    [Equation 2]

Herein, the total area of the outermost surface layer and the total area of pore portions in the SEM image of the above Equation 2 was determined by using image J software.

[Table 2]

| Type of catalyst | Catalyst coating amount (wt%) | | Total number of coating | BET $(m^2/g)$ | Average porosity (%) |
|---|---|---|---|---|---|
| | One-time coating amount | Total coating amount | | | |
| Example 1 | 2.1 | 14.7 | 7 | 35 | 18 |
| Example 2 | 3.0 | 6.0 | 2 | 31 | 15 |
| Example 3 | 2.5 | 15.0 | 6 | 37 | 20 |
| Example 4 | 4.0 | 16.0 | 4 | 44 | 22 |
| Example 5 | 4.5 | 18 | 4 | 41 | 18 |
| Example 6 | 3.2 | 17.5 | 5 | 40 | 28 |
| Example 7 | 2.4 | 12.0 | 5 | 36 | 23 |
| Comparative Example 1 | 1.4 | 14.0 | 10 | 24 | 9 |
| Comparative Example 2 | 1.1 | 5.5 | 5 | 20 | 6 |
| Comparative Example 3 | 5.6 | 16.8 | 3 | 38 | 13 |
| Comparative Example 4 | Less than 1 | Less than 1 | 1 | - | 3 |
| Comparative Example 5 | Less than 1 | Less than 1 | 1 | - | 5 |
| Comparative Example 6 | 1.5 | 6.0 | 4 | 22 | 9 |

As can be seen from the above results, the catalyst for methane reforming according to an exemplary embodiment of the present disclosure can realize increased porosity by adding a pore-forming agent to the first solution containing a precursor of a perovskite-based compound represented by the above Chemical Formula 1. Particularly, when comparing Example 1 with Comparative Example 1 or comparing Example 2 with Comparative Example 2, using the same composition of catalyst and the same type of carrier, except addition or non-addition of a pore-forming agent, it can be seen that Comparative Examples 1 and 2 require a larger number of coating in order to reach a catalyst coating amount similar to the catalyst coating amount of Examples 1 and 2. Therefore, according to an exemplary embodiment of the present disclosure, it is possible to obtain an effect of reducing total processing time.

In addition, when comparing Example 5 with Comparative Example 6, using the same composition of catalyst and the same type of carrier, except addition or non-addition of a pore-forming agent, it can be seen that Comparative Example 6 shows significantly low average porosity even though the same number of total coating as Example 5 is used.

Further, even though a pore-forming agent is added to the first solution, Comparative Example 3 provides a viscosity of coating solution that does not fall within the range as defined in the present disclosure, and thus the coating solution is coated on a carrier in a spherical shape to cause a decrease in surface area and a drop in contact area between the carrier surface and the catalyst coating layer, resulting in degradation of the interaction between the carrier and the catalyst coating layer, which causes a problem of separation of the catalyst coating layer from the carrier.

In addition, in the case of Comparative Examples 4 and 5, the catalyst coating layer comprises a conventional metal oxide, not a perovskite-based compound represented by the above Chemical Formula 1 according to the present disclosure, and thus provides a significantly small one-time coating amount of less than 1 wt% and shows significantly low porosity regardless of addition of a pore-forming agent.

**<Test example 2> Evaluation of methane reforming**

A fixed bed reaction system was introduced to carry out dry reforming of methane. Each of the catalysts (about 2.5 g) according to Examples and Comparative Examples was filled in a quartz tube reactor (inner diameter = 1/2 inch, length = 50 cm). First, reduction was carried out at 800°C under the condition of 10% $H_2/N_2$ for 2 hours. Then, catalytic reaction was carried out for 100 hours.

Gas composition: $CH_4$ : $CO_2$ : $N_2$ = 1 : 1.2 : 0.96
Flow rate: GHSV (Gas Hour Space Velocity) = 1,500 $hr^{-1}$ (on the basis of $CH_4$)
Reaction temperature: 800°C
Reaction pressure: 1 bar

The product gas was analyzed in terms of composition by using gas chromatography (GC) to calculate a reaction conversion ratio after carrying out the reaction for 100 hours. The results are shown in the following Table 3.

$$\text{Conversion ratio } (Xi, \%) = [(Fi_{in} - Fi_{out}) / Fi_{in}] \times 100 \ (Fi = \text{flow rate of } i)$$

**<GC Analysis Condition>**

1) GC model: Agilent 6890
2) Oven temperature: 40°C/7min-90°C/5min-180°C/6min
3) Detector: Thermal conductivity detector (TCD), 250°C
4) Sample loop: 0.25 mL
5) Valve box Temperature: 150°C

[Table 3]

| Type of catalyst | $CH_4$ conversion ratio (%) | $CO_2$ conversion ratio (%) | $H_2$/CO ratio |
|---|---|---|---|
| Example 1 | 88 | 89 | 0.90 |
| Example 3 | 89 | 90 | 0.90 |
| Example 4 | 90 | 92 | 0.90 |
| Example 5 | 88 | 89 | 0.90 |
| Example 6 | 91 | 92 | 0.90 |
| Example 7 | 90 | 89 | 0.89 |
| Comparative Example 2 | 60 | 65 | 0.72 |
| Comparative Example 6 | 81 | 83 | 0.85 |

As can be seen from the above results, the catalyst for methane reforming according to an embodiment of the present disclosure can provide an increased active surface area, and show high activity even at a high space velocity when being used for methane reforming, by adding a pore-forming agent to the first solution containing a precursor of a perovskite-based compound represented by the above Chemical Formula 1.

In addition, when comparing Example 5 with Comparative Example 6, using the same composition of catalyst and the same type of carrier, except addition or non-addition of a pore-forming agent, it can be seen that Example 5 according to the present disclosure provides improved results in terms of both $CH_4$ conversion ratio and $CO_2$ conversion

ratio.

**Claims**

1. A method for preparing a catalyst for methane reforming, comprising the steps of:

   preparing a first solution comprising a precursor of a perovskite-based compound represented by the following Chemical Formula 1;
   adding a pore-forming agent which is a hydrophilic oligomer or polymer to the first solution to prepare a second solution; and
   coating a carrier with the second solution and carrying out heat treatment to obtain a catalyst,
   wherein the second solution has a viscosity of 10 cp to 1,500 cp at 25°C:

   $$[Chemical\ Formula\ 1] \qquad Sr_{1-x}A_xTi_\alpha B_yO_{3-\delta}$$

   wherein A is selected from the group consisting of Y, Sc, La and lanthanide-series elements,
   B is Ni, Co, Fe, Mn, Cr, Mo, Ru or Rh,
   x is a real number equal to or larger than 0 and less than 1,
   y is a real number equal to or larger than 0 and less than 0.2,
   $\delta$ is a real number equal to or larger than 0 and less than 1,
   $\alpha$ is a real number larger than 0.8 and equal to or less than 1, and
   x and y satisfy $(x + y) > 0$.

2. The method for preparing a catalyst for methane reforming according to claim 1, wherein the pore-forming agent comprises one or more selected from polyethylene glycol, polyethylene oxide, polyvinyl alcohol, polyvinyl pyrrolidone and polyacrylic acid

3. The method for preparing a catalyst for methane reforming according to claim 1, wherein the pore-forming agent is added in an amount of 1 wt% to 25 wt% based on the total weight of the first solution.

4. The method for preparing a catalyst for methane reforming according to claim 1, wherein the carrier comprises at least one selected from NiFeCrAl, NiCrAl, stainless steel, Inconel, SiC and $\alpha$-Al$_2$O$_3$.

5. The method for preparing a catalyst for methane reforming according to claim 1, wherein Chemical Formula 1 is represented by the following Chemical Formula 2 or 3:

   $$[Chemical\ Formula\ 2] \qquad SrTi_\alpha B_yO_{3-\delta}$$

   $$[Chemical\ Formula\ 3] \qquad Sr_{1-x}Y_xTi_\alpha B_yO_{3-\delta}$$

   wherein B is Ni, Ru or Rh,
   x is a real number larger than 0 and less than 1,
   y is a real number larger than 0 and less than 0.2,
   $\delta$ is a real number larger than 0 and less than 1, and
   $\alpha$ is a real number larger than 0.8 and less than 1.

6. A catalyst for methane reforming comprising:

   a carrier; and
   a coating layer provided on the carrier and comprising a perovskite-based compound represented by the following Chemical Formula 1,
   wherein the outermost surface layer of the catalyst for methane reforming has an average porosity of 15% or more as determined by the following Method 1:

   $$[Chemical\ Formula\ 1] \qquad Sr_{1-x}A_xTi_\alpha B_yO_{3-\delta}$$

wherein A is selected from the group consisting of Y, Sc, La and lanthanide-series elements,
B is Ni, Co, Fe, Mn, Cr, Mo, Ru or Rh,
x is a real number equal to or larger than 0 and less than 1,
y is a real number equal to or larger than 0 and less than 0.2,
$\delta$ is a real number equal to or larger than 0 and less than 1,
$\alpha$ is a real number larger than 0.8 and equal to or less than 1, and
x and y satisfy (x + y) > 0,
[Method 1]
A scanning electron microscopic (SEM) image is obtained at any position of the outermost surface layer of the catalyst for methane reforming at an accelerated voltage of 5 kv and a magnification of 10,000X with a pixel of 1,280 x 960, and then porosity is calculated according to the following Equation 2. Herein, 20 SEM images are obtained at any positions not overlapped with one another, porosity is calculated from each SEM image, and the average value of the porosity values is evaluated as average porosity (%):

Porosity (%) = (Total area of pore portions in SEM image) / (Total area of outermost surface layer in SEM image) X 100    [Equation 2]

7. The catalyst for methane reforming according to claim 6, wherein the carrier comprises at least one selected from NiFeCrAl, NiCrAl, stainless steel, Inconel, SiC and $\alpha$-Al$_2$O$_3$.

8. The catalyst for methane reforming according to claim 6, wherein Chemical Formula 1 is represented by the following Chemical Formula 2 or 3:

    [Chemical Formula 2]         $SrTi_\alpha B_y O_{3-\delta}$

    [Chemical Formula 3]         $Sr_{1-x}Y_x Ti_\alpha B_y O_{3-\delta}$

wherein B is Ni, Ru or Rh,
x is a real number larger than 0 and less than 1,
y is a real number larger than 0 and less than 0.2,
$\delta$ is a real number larger than 0 and less than 1, and
$\alpha$ is a real number larger than 0.8 and less than 1.

9. The catalyst for methane reforming according to claim 6, wherein the coating layer comprising a perovskite-based compound represented by the following Chemical Formula 1 is present in an amount of 3 wt% to 40 wt% based on the total weight of the catalyst for methane reforming.

【FIG. 1】

【FIG. 2】

【FIG. 3】

【FIG. 4】

【FIG. 5】

【FIG. 6】

5.0kV 10.7mm x10.0k        5.00um

## INTERNATIONAL SEARCH REPORT

| | International application No. |
|---|---|
| | **PCT/KR2025/002534** |

### A. CLASSIFICATION OF SUBJECT MATTER

**B01J 37/08**(2006.01)i; **B01J 23/00**(2006.01)i; **B01J 23/83**(2006.01)i; **B01J 20/30**(2006.01)i; **B01J 37/02**(2006.01)i; **C01B 3/40**(2006.01)i

According to International Patent Classification (IPC) or to both national classification and IPC

### B. FIELDS SEARCHED

Minimum documentation searched (classification system followed by classification symbols)

B01J 37/08(2006.01); B01J 21/06(2006.01); B01J 23/00(2006.01); B01J 23/755(2006.01); B01J 6/00(2006.01); C04B 38/00(2006.01); C04B 38/04(2006.01); H01M 8/02(2006.01); H01M 8/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 페로브스카이트계 촉매(perovskite catalyst), 친수성 올리고머 또는 고분자 (hydrophilic oligomer or polymer), 기공형성제(pore former), 지지체(support), 점도(viscosity), 메탄 개질(methane reforming), 코팅층(coating layer), 기공도(porosity)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0057253 A (LG CHEM, LTD.) 28 April 2023 (2023-04-28)<br>See claims 1, 4, 5, 7 and 9. | 1-9 |
| Y | KR 10-2001-0089940 A (SAE HAN INDUSTRIAL CO., LTD.) 17 October 2001 (2001-10-17)<br>See paragraphs [0001] and [0011]; and claims 1 and 5. | 1-9 |
| A | KR 10-2011-0121968 A (DOOSAN HEAVY INDUSTRIES & CONSTRUCTION CO., LTD.) 09 November 2011 (2011-11-09)<br>See entire document. | 1-9 |
| A | KR 10-2023-0072397 A (LG CHEM, LTD.) 24 May 2023 (2023-05-24)<br>See entire document. | 1-9 |

| ✓ | Further documents are listed in the continuation of Box C. | ✓ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 June 2025** | **09 June 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2025/002534** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-1444600 B1 (KYUNGPOOK NATIONAL UNIVERSITY INDUSTRY-ACADEMIC COOPERATION FOUNDATION) 30 September 2014 (2014-09-30)<br>See entire document. | 1-9 |

Form PCT/ISA/210 (second sheet) (July 2022)

## INTERNATIONAL SEARCH REPORT
### Information on patent family members

| International application No. |
| --- |
| **PCT/KR2025/002534** |

| Patent document cited in search report | | | Publication date (day/month/year) | Patent family member(s) | | | Publication date (day/month/year) |
| --- | --- | --- | --- | --- | --- | --- | --- |
| KR | 10-2023-0057253 | A | 28 April 2023 | CN | 116635145 | A | 22 August 2023 |
| | | | | EP | 4245409 | A1 | 20 September 2023 |
| | | | | JP | 2024-500507 | A | 09 January 2024 |
| | | | | KR | 10-2023-0057254 | A | 28 April 2023 |
| | | | | US | 2024-0116032 | A1 | 11 April 2024 |
| | | | | WO | 2023-068497 | A1 | 27 April 2023 |
| KR | 10-2001-0089940 | A | 17 October 2001 | KR | 10-0359710 | B1 | 04 November 2002 |
| KR | 10-2011-0121968 | A | 09 November 2011 | KR | 10-1274592 | B1 | 13 June 2013 |
| KR | 10-2023-0072397 | A | 24 May 2023 | CN | 116829259 | A | 29 September 2023 |
| | | | | EP | 4257235 | A1 | 11 October 2023 |
| | | | | EP | 4257235 | B1 | 12 February 2025 |
| | | | | JP | 2024-503471 | A | 25 January 2024 |
| | | | | JP | 7648288 | B2 | 18 March 2025 |
| | | | | US | 2024-0100508 | A1 | 28 March 2024 |
| | | | | WO | 2023-090583 | A1 | 25 May 2023 |
| KR | 10-1444600 | B1 | 30 September 2014 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240047482